# FASCICULE DE BREVET EUROPEEN

(11) **EP 4 310 605 B1**
(45) Date de publication et mention de la délivrance du brevet: **17.12.2025**
(21) Numéro de dépôt: 22185894.7
(22) Date de dépôt: 20.07.2022
(51) Int. Cl.: G04B 21/06, G04B 31/00, G04B 23/02

(54) **MOUVEMENT HORLOGER COMPRENANT UN MÉCANISME DE SONNERIE DOTÉ D'UN GUIDAGE FLEXIBLE**
UHRWERK MIT EINEM SCHLAGWERK, DAS MIT EINER FLEXIBLEN FÜHRUNG AUSGESTATTET IST
TIMEPIECE MOVEMENT COMPRISING A STRIKING MECHANISM PROVIDED WITH A FLEXURE

(43) Date de publication de la demande: 24.01.2024
(73) Titulaire: The Swatch Group Research and Development Ltd, 2074 Marin (CH)
(72) Inventeur: HINAUX, Baptiste, 1003 Lausanne (CH); FAVRE, Jérôme, 2000 Neuchâtel (CH); Jonathan, MEYER, 2503 Bienne (CH)
(74) Mandataire: ICB SA

(56) Documents cités:
- EP-A1- 2 463 731
- EP-A1- 3 992 730
- CH-A2- 715 617
- US-A1- 2014 292 432

## Description

### Domaine technique de l'invention

L'invention relève du domaine des complications de mouvement horloger, et notamment des mécanismes de sonnerie d'une montre.

Plus particulièrement, l'invention concerne un mouvement horloger comprenant un mécanisme de sonnerie doté d'un guidage flexible.

Un tel mécanisme de sonnerie peut être adapté à tout type de sonnerie, tels qu'une répétition des quarts, des minutes, une grande sonnerie, une petite sonnerie ou une alarme.

### Arrière-plan technologique

Les mécanismes de sonnerie de montres sont connus pour comporter un marteau destiné à frapper un élément vibrant, tel qu'un timbre.

En particulier, le marteau est contraint en déplacement vers l'élément vibrant par un ressort et est armé, c'est-à-dire maintenu à distance du timbre, par un mécanisme d'activation, tel qu'une levée ou autre mécanisme dédié.

Généralement, l'élément vibrant s'étend selon une direction curviligne dans la boite de montre, par exemple autour d'un axe central de ladite boite. Lors de l'impact du marteau sur l'élément vibrant, le marteau génère des efforts sur l'élément vibrant provoquant sa vibration et par voie de conséquence, le son de la sonnerie. Ces efforts comportent une composante normale et une composante tangentielle, cette dernière caractérisant les frottements du marteau sur l'élément vibrant.

En particulier, la mise en vibration de l'élément vibrant est essentiellement générée par la composante normale des efforts appliqués par le marteau, d'où la nécessité de maitriser et de maximiser cette composante normale pour maitriser l'efficacité de l'impact du marteau sur l'élément vibrant et le son produit par cet impact.

Le document CH 715 617 A2 décrit un marteau de sonnerie monté pivotant sur un guidage flexible.

### Résumé de l'invention

L'invention résout les inconvénients précités en proposant, à cet effet, un mouvement horloger comprenant un mécanisme de sonnerie d'une montre comprenant un élément vibrant et un dispositif de frappe dudit élément vibrant. Le dispositif de frappe comprend un marteau fixé en porte à faux à une structure du mouvement horloger par l'intermédiaire d'au moins deux lames élastiques formant un guidage flexible. Les deux lames sont agencées l'une et l'autre de sorte à s'étendre selon des directions parallèles à un axe T tangent à une surface de l'élément vibrant destinée à être frappée par le marteau du dispositif de frappe.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le dispositif de frappe est fixé à la structure du mouvement horloger uniquement par une liaison mécanique de type encastrement.

Dans des modes particuliers de réalisation, au moins les lames sont réalisées en silicium, par gravure ionique réactive profonde.

Dans des modes particuliers de réalisation, au moins les lames sont réalisées par usinage laser, en particulier par laser femtosecondes, ou par électroérosion.

Dans des modes particuliers de réalisation, le dispositif de frappe est monobloc.

Dans des modes particuliers de réalisation, le dispositif de frappe est réalisé en métal amorphe, par moulage ou par formage à chaud.

Dans des modes particuliers de réalisation, le dispositif de frappe est réalisé en nickel ou en nickel phosphore, par procédé LIGA.

Dans des modes particuliers de réalisation, les lames présentent une épaisseur plus faible que celle du marteau.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement une vue de dessus d'un mécanisme de sonnerie comprenant un dispositif de frappe dans un état de repos, selon un exemple préféré de réalisation de l'invention :
- la figure 2 représente schématiquement une vue en coupe transversale du dispositif de frappe du mécanisme de sonnerie de la figure 1.

On note que les figures ne sont pas nécessairement dessinées à l'échelle pour des raisons de clarté.

### Description détaillée de l'invention

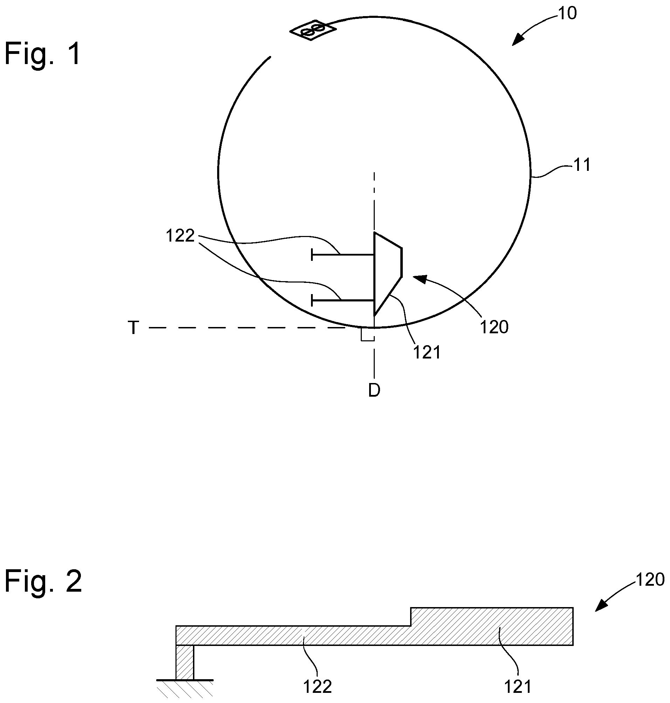

La figure 1 montre un mécanisme de sonnerie 10 d'un mouvement horloger d'une montre dans un exemple préféré de réalisation de l'invention.

Le mécanisme de sonnerie 10 comprend un élément vibrant 11 et un dispositif de frappe 120 destiné à percuter ledit élément vibrant 11 afin de provoquer la production d'un son. L'élément vibrant 11 est fixé à une structure du mouvement horloger, par exemple à un pont, à une platine, etc., et est, dans l'exemple de réalisation représenté sur la figure 1, formé par un timbre.

Le dispositif de frappe 120 comprend un marteau 121 fixé en porte à faux à la structure du mouvement horloger par l'intermédiaire de plusieurs lames 122 formant un guidage flexible. Les lames 122 présentent une capacité de déformation élastique et sont utilisées dans la présente invention pour le guidage et l'entraînement du marteau 121. Les lames 122 sont préférentiellement au nombre de deux. En particulier, chaque lame 122 présente une forme rectiligne lorsque le dispositif de frappe 120 est dans un état de repos, c'est-à-dire dans une position d'équilibre. Le guidage flexible formé par les lames 122 est un guidage en translation.

De façon connue en soi par l'homme du métier, en résumé, le dispositif de frappe 120 est armé par un mécanisme d'activation (non représenté sur les figures), tel qu'une levée ou tout autre mécanisme dédié, c'est-à-dire que le marteau 121 est entraîné à distance de l'élément vibrant 11, de sorte à contraindre les lames 122 à se déformer progressivement, jusqu'à atteindre un état d'armage. Par la suite, en réponse au passage d'une valeur temporelle prédéfinie de l'heure courante ou sur instruction d'un utilisateur, le mécanisme d'activation libère le marteau 121 qui est alors, sous l'effet de l'effort de rappel élastique des lames 122, entraîné en percussion sur l'élément vibrant 11, le dispositif de frappe 120 étant alors dans un état de percussion.

Avantageusement, les lames 122 permettent de positionner très précisément le marteau 121 par rapport à la structure du mouvement horloger, et en particulier par rapport à l'élément vibrant 11, sans jeu mécanique et sans lubrification, contrairement à un pivot conventionnel d'horlogerie. Par ailleurs, les lames 122 fournissent une quantité constante d'énergie pour déplacer le marteau 121 en translation, lors de chaque percussion du dispositif de frappe 120 sur l'élément vibrant 11.

Comme le montrent schématiquement les figures 1 et 2, les lames 122 s'étendent entre deux extrémités longitudinales. Chaque lame 122 est donc liée mécaniquement, par l'une de ses extrémités longitudinales, à la structure du mouvement horloger, et par son autre extrémité longitudinale, au marteau 121. Autrement dit, le dispositif de frappe 120 est fixé à la structure du mouvement horloger uniquement par une liaison mécanique de type encastrement, c'est-à-dire que les lames 122 constituent la seule liaison mécanique entre le marteau 121 et la structure.

En particulier, chaque lame 122 peut être fixée à la structure du mouvement horloger par soudage, vissage, collage, ajustement serré, ou par tout autre moyen adapté à la portée de l'homme du métier.

Les lames 122 sont agencées l'une et l'autre de sorte à s'étendre selon des directions parallèles à un axe T tangent à l'élément vibrant 11, comme le montre la figure 1. Plus précisément, l'axe T est tangent à une surface de l'élément vibrant 11 destinée à être soumise à l'impact du marteau 121. Ainsi, le marteau est entraîné en translation selon une direction D perpendiculaire à l'axe T, ou sensiblement en translation selon une direction tangente à une direction D perpendiculaire à l'axe T.

Cette caractéristique présente plusieurs avantages.

En effet, cette caractéristique permet de maximiser la composante normale des efforts appliqués par le marteau 121 sur l'élément vibrant 11 lors de la percussion, voire d'éliminer toute composante tangentielle. Ainsi, la percussion est plus efficace en terme d'efforts transmis à l'élément vibrant 11 pour des caractéristiques élastiques données des lames 122, ce qui génère un volume sonore produit par ladite percussion plus important.

Par ailleurs, cette caractéristique permet une meilleure maitrise de la position du point de frappe du marteau 121 sur la surface de l'élément vibrant 11, et permet ainsi un meilleur contrôle de la réaction vibratoire dudit élément vibrant 11 et donc de l'effet sonore produit lors de la percussion. Plus précisément, l'effet sonore produit lors de la percussion est différent selon que le point de frappe se situe sur un nœud ou sur un ventre de vibration d'un mode vibratoire de l'élément vibrant 11.

Enfin, l'utilisation d'un guidage flexible et son agencement particulier permet de diminuer l'encombrement du dispositif de frappe 120 et de diminuer considérablement le nombre de pièces constituant ledit dispositif, dans la mesure où ledit guidage flexible joue à la fois un rôle de guidage et un rôle de rappel élastique.

Préférentiellement, le dispositif de frappe 120 est monobloc. Ainsi, le dispositif de frappe 120 est particulièrement simple à réaliser, et son coût de fabrication est contenu. En outre, le mécanisme n'est pas susceptible de souffrir d'une perte de puissance lors de la percussion liée à d'éventuels jeux mécaniques qui auraient pu exister si le dispositif de frappe 120 était conçu par assemblage de diverses pièces.

En particulier, le dispositif de frappe 120 peut être réalisé en métal amorphe, par exemple par moulage ou formage à chaud, ou en nickel ou nickel phosphore, par exemple par procédé LIGA.

Alternativement, le dispositif de frappe 120, et en particulier les lames 122, peuvent être réalisées en silicium, par exemple par gravure sèche, et plus particulièrement par gravure ionique réactive profonde, méthode de fabrication connue en tant que telle par l'homme du métier sous l'acronyme *DRIE* signifiant *Deep Rective Ion Etching* en langue anglaise. Les lames 122 peuvent, encore alternativement, être réalisées en acier, par usinage laser, en particulier par laser femtosecondes, ou par électroérosion.

En particulier, le marteau 121 peut comporter une ou des masses réalisées dans un matériau métallique, par exemple en tungstène ou en acier, à laquelle sont fixées les lames 122 par chassage, collage, par vis ou goupille.

Avantageusement, les lames 122 présentent une épaisseur plus faible que celle du marteau 121, tel que visible sur la vue schématique en coupe de la figure 2. Cette caractéristique permet d'augmenter la masse du marteau 121 relativement à celle des lames 122, et donc d'augmenter l'énergie fournie par ce dernier lors de la percussion contre l'élément vibrant 11.

Il y a lieu de noter que l'épaisseur est définie comme étant la dimension s'étendant selon une direction perpendiculaire à un plan dans lequel le dispositif de frappe 120 et l'élément vibrant 11 sont mobiles.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, le marteau présente une forme trapézoïdale dans l'exemple de réalisation représenté sur la figure 1, mais il peut alternativement présenter toute forme appropriée pour la réalisation de la percussion.

En outre, dans l'exemple de réalisation représenté sur la figure 1, l'élément vibrant 11 est formé par un timbre comprenant un brin s'étendant selon une direction circulaire à l'intérieure de laquelle est agencé le dispositif de frappe 120. Alternativement, le dispositif de frappe 120 pourrait être agencé à l'extérieur du brin du timbre.

Par ailleurs, l'élément vibrant 11 peut adopter toute forme adaptée lui permettant de vibrer suite à une percussion d'un marteau et de générer un son en vibrant, telle qu'une cloche ou un gong.

## Revendications

1. Mouvement horloger comprenant un mécanisme de sonnerie (10) d'une montre comprenant un élément vibrant (11) et un dispositif de frappe (120) dudit élément vibrant (11) comprenant un marteau (121) fixé en porte à faux à une structure du mouvement horloger par l'intermédiaire de lames (122) élastiques formant un guidage flexible, ledit mécanisme de sonnerie (10) étant **caractérisé en ce que** lesdites lames (122) sont agencées l'une et l'autre de sorte à s'étendre selon des directions parallèles à un axe T tangent à une surface de l'élément vibrant (11) destinée à être soumise à l'impact du marteau (121), de sorte que le marteau (121) soit entraîné en translation selon une direction D perpendiculaire à l'axe T.

2. Mouvement horloger selon la revendication 1, dans lequel le dispositif de frappe (120) est fixé à la structure du mouvement horloger uniquement par une liaison mécanique de type encastrement.

3. Mouvement horloger selon l'une des revendications 1 ou 2, dans lequel au moins les lames (122) sont réalisées en silicium, par gravure ionique réactive profonde.

4. Mouvement horloger selon l'une des revendications 1 à 3, dans lequel au moins les lames (122) sont réalisées par usinage laser, en particulier par laser femtosecondes, ou par électroérosion.

5. Mouvement horloger selon l'une des revendications 1 à 4, dans lequel le dispositif de frappe (120) est monobloc.

6. Mouvement horloger selon la revendication 5, dans lequel le dispositif de frappe (120) est réalisé en métal amorphe, par moulage ou par formage à chaud.

7. Mouvement horloger selon la revendication 5, dans lequel le dispositif de frappe (120) est réalisé en nickel ou en nickel phosphore, par procédé LIGA.

8. Mouvement horloger selon l'une des revendications 1 à 7, dans lequel les lames (122) présentent une épaisseur plus faible que celle du marteau (121).

## Patentansprüche

1. Uhrwerk mit einem Schlagwerk (10) einer Uhr, das ein Schwingelement (11) und eine Schlagvorrichtung (120) des Schwingelements (11) umfasst, mit einem Hammer (121), der über elastische Blätter (122), die eine flexible Führung bilden, freitragend an einer Struktur des Uhrwerks befestigt ist, wobei der genannte Klingelmechanismus (10) **dadurch gekennzeichnet ist, dass** die genannten Blätter (122) beide so angeordnet sind, dass sie sich in Richtungen parallel zu einer Achse T erstrecken, die tangential zu einer Oberfläche des Schwingelements (11) verläuft, die dem Aufprall des Hammers (121) ausgesetzt sein soll, sodass der Hammer (121) in einer Richtung D senkrecht zur Achse T verschoben wird.

2. Uhrwerk gemäß Anspruch 1, bei der die Schlagvorrichtung (120) nur durch eine mechanische Verbindung vom Typ Steckverbindung an der Struktur des Uhrwerks befestigt ist.

3. Uhrwerk gemäß einem der Ansprüche 1 oder 2, bei dem mindestens die Blätter (122) durch eine tiefe ionische reaktive Gravur aus Silizium hergestellt werden.

4. Uhrwerk gemäß der Ansprüche 1 bis 3, bei der mindestens die Blätter (122) durch Laserbearbeitung, insbesondere durch Femtosekunden-Laser, oder durch Elektroerosion hergestellt werden.

5. Uhrbewegung gemäß einem der Ansprüche 1 bis 4, wobei die Schlagvorrichtung (120) einteilig ist.

6. Uhrwerk gemäß Anspruch 5, bei der die Schlagvorrichtung (120) aus amorphem Metall durch Gießen oder Heißformgebung hergestellt ist.

7. Uhrwerk gemäß Anspruch 5, bei der die Schlagvorrichtung (120) aus Nickel oder Nickelphosphor mittels LIGA-Verfahren hergestellt ist.

8. Uhrwerk gemäß einem der Ansprüche 1 bis 7, bei der die Blätter (122) eine geringere Dicke als der Hammer (121) aufweisen.

## Claims

1. A horological movement comprising a striking mechanism (10) of a watch comprising a vibrating element (11)and a device (120) for striking said vibrating element (11) comprising a hammer (121) fastened cantilevered to a structure of the horological movement through elastic blades (122) forming a flexible guide, said striking mechanism (10) being **characterised in that** said blades (122) are arranged so as to extend according to directions parallel to an axis T tangent to a surface of the vibrating element (11) intended to be subjected to the impact of the hammer (121), so the hammer (121) is driven in translation according to a direction D perpendicular to the axis T .

2. The horological movement according to claim 1, wherein the striking device (120) is fastened to the structure of the horological movement only by an embedded type mechanical connection.

3. The horological movement according to one of claims 1 or 2, wherein at least the blades (122) are made of silicon, by deep reactive-ion etching.

4. The horological movement according to one of claims 1 to 3, wherein at least the blades (122) are made by laser machining, in particular by femtosecond laser, or by electrical discharge machining.

5. The horological movement according to one of claims 1 to 4, wherein the striking device (120) is made in one-piece.

6. The horological movement according to claim 5, wherein the striking device (120) is made of amorphous metal, by moulding or by hot forming.

7. The horological movement according to claim 5, wherein the striking device (120) is made of nickel or of nickel-phosphorus, by the LIGA process.

8. The horological movement according to one of claims 1 to 7, wherein the blades (122) have a smaller thickness than that of the hammer (121).
